# FASCICULE DE BREVET EUROPEEN

(11) **EP 0 693 893 B1**
(45) Date de publication et mention de la délivrance du brevet: **05.03.1997**
(21) Numéro de dépôt: 94913157.7
(22) Date de dépôt: 12.04.1994
(51) Int. Cl.: A47J 36/38

(54) **APPAREIL DE CUISSON, TEL QUE PAR EXEMPLE UNE FRITEUSE, COMPORTANT UN DISPOSITIF DE CONDENSATION DES VAPEURS DE CUISSON**
GARGERÄT, BEISPIELSWEISE FRITEUSE
COOKING APPARATUS SUCH AS A DEEP FRYER, COMPRISING A COOKING VAPOUR CONDENSER DEVICE

(30) Priorité: 16.04.1993 FR 9304539
(43) Date de publication de la demande: 31.01.1996
(73) Titulaire: MOULINEX S.A., F-93170 Bagnolet (FR)
(72) Inventeur: BAILLIEUL, Philippe, Louis, Robert, F-14280 Saint-Germain-La-Blanche-Herbe (FR); BOUFFAY, Alain, F-14200 Herouville-Saint-Clair (FR); CHARTRAIN, Pierre, F-14540 Soliers-Bourguebus (FR); COLLAS, Guy, F-14123 Ifs (FR)
(74) Mandataire: Busquets, Jean-Pierre
(86) Numéro de dépôt international: FR9400406
(87) Numéro de publication internationale: WO9423625

(56) Documents cités:
- EP-A- 0 343 141
- WO-A-91/04698
- DE-C- 592 773
- DE-U- 8 502 304
- FR-A- 2 239 224
- PATENT ABSTRACTS OF JAPAN vol. 16, no. 148 (C-0928) 13 Avril 1992 & JP,A,04 005 924 (MATSUSHITA ELECTRIC IND CO LTD) 9 Janvier 1992

## Description

La présente invention se rapporte aux appareils de cuisson, tels que par exemple des friteuses à usage ménager, comprenant un boîtier ouvert susceptible d'être fermé par un couvercle, une cuve de cuisson disposée dans le boîtier et fermée de façon sensiblement étanche par le couvercle pendant la phase de cuisson, un dispositif de condensation des vapeurs de cuisson placé à l'extérieur du boîtier, et des moyens d'écoulement des vapeurs de cuisson reliant le volume supérieur de la cuve de cuisson à l'entrée du dispositif de condensation.

Dans des appareils connus de ce genre, tels que celui décrit dans le document WO-A-91/04698, le dispositif de condensation est monté sur le côté du boîtier et assure par condensation l'élimination des vapeurs émises au cours de la cuisson et contenant les substances odorantes inopportunes, tandis que les moyens d'écoulement des vapeurs de cuisson sont constitués par une chambre formée dans le couvercle, comprenant des orifices d'admission des vapeurs émanant de la cuve, et communiquant avec l'entrée du dispositif de condensation. Toutefois, du fait de la présence de cette chambre, l'écoulement des vapeurs de cuisson ne s'effectue pas d'une manière permanente depuis la cuve jusqu'à l'entrée du dispositif de condensation.

Pour ce type d'appareil utilisant comme dispositif anti-odeurs un dispositif condenseur placé latéralement sur le boîtier contenant la cuve de cuisson, il s'avère alors nécessaire d'établir, entre la cuve et le dispositif condenseur, un passage intime adapté à permettre l'écoulement permanent des vapeurs de cuisson au travers du boîtier fermé.

L'invention se propose, par suite, de réaliser d'une manière simple et efficace ce passage intime destiné à l'écoulement des vapeurs de cuisson depuis la cuve de cuisson jusqu'au dispositif condenseur.

Selon l'invention, ce résultat est atteint grâce au fait que dans l'appareil de cuisson, du type exposé ci-dessus, les moyens d'écoulement des vapeurs de cuisson sont constitués par au moins un conduit présentant un tronçon dit amont qui fait partie intégrante du couvercle et dont les deux extrémités débouchent chacune dudit couvercle, l'une de ces extrémités du tronçon amont débouchant dans le volume supérieur de la cuve, ainsi qu'un tronçon dit aval qui relie l'autre extrémité du tronçon amont à l'entrée du dispositif de condensation.

Grâce à cette intégration du tronçon amont du conduit dans le couvercle, on obtient un trajet des vapeurs de cuisson à l'intérieur du couvercle qui est simple, facile à établir, et parfaitement canalisé. Une telle simplicité de réalisation est par ailleurs bien adaptée à une fabrication d'appareils en grande série.

De préférence, le couvercle est monté articulé de façon amovible sur un bord supérieur du boîtier, de sorte qu'une fois démonté, le couvercle intégrant le tronçon amont du conduit est facilement nettoyable, même dans un lave-vaisselle.

D'autres caractéristiques et avantages de l'invention ressortiront d'ailleurs de la description qui va suivre d'un mode particulier de réalisation pris à titre d'exemple non limitatif illustré aux dessins annexés dans lesquels :
- la figure 1 est une vue schématique en perspective d'un appareil de cuisson, tel qu'une friteuse, selon l'invention, le couvercle étant ouvert ; et
- la figure 2 est une vue schématique en coupe verticale, à plus grande échelle, de la friteuse de la figure 1, le couvercle étant fermé.

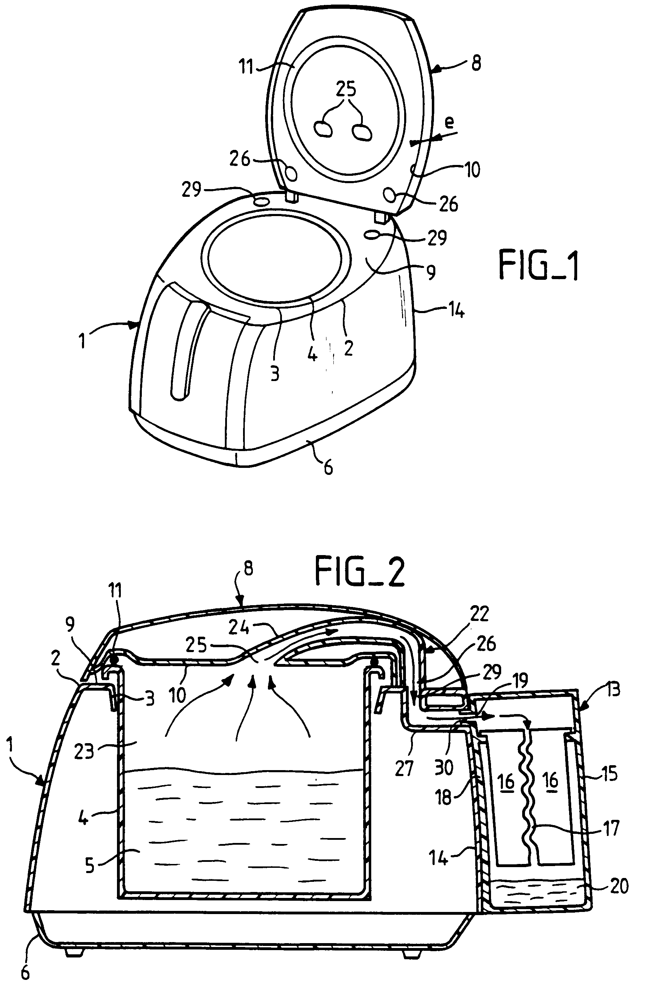

L'appareil de cuisson représenté schématiquement aux figures 1 et 2 est une friteuse ménagère qui comprend un boîtier ou récipient 1 de forme sensiblement parallélépipédique présentant, à légère distance de son bord supérieur 2, une ouverture 3 dans laquelle est placée une cuve métallique 4 contenant un bain de cuisson 5. Le boîtier 1 est supporté par un socle 6, de préférence réalisé d'une pièce avec le boîtier, et est destiné à être fermé par un couvercle 8, d'épaisseur e, monté articulé de façon amovible sur la face supérieure plane 9 du boîtier grâce à un moyen d'articulation démontable (non figuré).

Le couvercle 8 comporte sur sa face interne 10 un joint 11 conformé de manière à réaliser l'étanchéité entre le couvercle et la cuve de cuisson 4 lorsque le couvercle est fermé.

Le boîtier 1, le socle 6 et le couvercle 8 sont moulés en une matière plastique telle que, par exemple, le polypropylène, qui est particulièrement économique et d'un entretien facile.

Comme le montre la figure 2, la friteuse comprend également un dispositif de condensation de vapeur 13 qui est placé à l'extérieur du boîtier 1. Dans cet exemple de la figure 2, le dispositif condenseur 13 est appliqué contre la face arrière 14 du boîtier 1 en étant maintenu en place sur ce dernier au moyen d'éléments de fixation (non figurés). Bien entendu, le dispositif condenseur 13 pourrait être appliqué latéralement sur le boîtier 1, sans sortir pour cela du cadre de l'invention.

A titre d'exemple nullement limitatif, le dispositif de condensation de vapeur 13 tel qu'illustré à la figure 2, est formé par une boîte ou réservoir hermétique 15, de forme sensiblement parallélépipédique, contenant deux cassettes ou blocs réfrigérants 16 s'étendant verticalement et délimitant entre eux un canal condenseur 17 de section verticale en forme de serpentin. Le réservoir 15 comporte sur sa face postérieure 18 appliquée contre le boîtier 1 deux orifices 19 d'admission des vapeurs dont un seul est visible sur la figure 2. Le fond des deux blocs réfrigérants 16 est espacé du fond du réservoir 15 de manière à créer une zone 20 destinée à collecter le condensat en sortie du canal 17.

Selon l'invention, la friteuse comporte un ou plusieurs conduits, dont un seul est visible sur la figure 2 et porte la référence 22, qui sont destinés chacun à relier, au cours de la friture (le couvercle 8 étant fermé), le volume supérieur 23 de la cuve de cuisson 4 au dispositif de condensation de vapeur 13 afin d'assurer l'écoulement ou l'évacuation des vapeurs de cuisson, et qui présentent chacun un tronçon amont 24 faisant partie intégrante du couvercle 8 et ayant deux extrémités 25, 26 débouchant du couvercle, l'une 25 de ces extrémités débouchant dans le volume supérieur 23 de la cuve, ainsi qu'un tronçon aval 27 reliant l'autre extrémité 26 du tronçon amont 24 au dispositif de condensation de vapeur 13, voir figure 2.

Dans l'exemple de réalisation représenté à la figure 2, le tronçon amont 24 du conduit 22 est intégralement formé dans l'épaisseur du couvercle 8, de préférence au cours du moulage de ce dernier, d'une manière telle que ses deux extrémités 25,26 débouchent, pour l'une 25, sensiblement au centre de la face interne 10 du couvercle 8, et pour l'autre 26, en un endroit de cette même face 10 situé à proximité de la face arrière 14 du boîtier 1.

A titre de variante (non illustrée), le tronçon amont du conduit est constitué par une nervure venue de moulage avec le couvercle et conformée en canal.

Comme le montre la figure 2, le tronçon aval 27 du conduit 22 est présentement formé dans la masse du boîtier 1, de préférence au cours du moulage de ce dernier, et présente une section de forme générale en "L" dont l'extrémité 29 de la branche verticale débouche de la face supérieure 9 du boîtier pour communiquer directement, en parfaite coïncidence, avec l'extrémité correspondante 26 du tronçon amont 24 lors de la fermeture du couvercle 8, et dont l'extrémité 30 de la branche horizontale débouche de la face arrière 14 du boîtier 1 et communique directement avec l'orifice 19 du réservoir 15.

Il convient de noter que l'intégration du tronçon aval 27 du conduit 22 dans le boîtier 1 remplace avantageusement l'utilisation d'un tube classique de raccordement. De plus, ce tronçon aval intégré 27 est relativement court, ce qui facilite d'autant son nettoyage.

Dans la forme d'exécution illustrée à la figure 1, il est prévu de réaliser deux conduits, chacun du type représenté en 22 sur la figure 2, qui s'étendent symétriquement par rapport à un plan médian de la friteuse ; sur cette figure 1, seules sont visibles les deux extrémités 25,26 de chacun des deux tronçons amonts formés dans le couvercle 8, ainsi que l'extrémité 29 de chacun des deux tronçons avals formés dans le boîtier 1, les extrémités respectives 26 et 29 concordant l'une avec l'autre.

L'évacuation et l'élimination des vapeurs présentes dans la friteuse s'effectuent de la manière suivante, en se référant à la figure 2.

Au cours de la friture, les vapeurs (symbolisées par les flèches) qui se dégagent et qui contiennent les substances odorantes inopportunes s'échappent d'abord par le tronçon amont 24 incorporé au couvercle 8, puis par le tronçon aval communiquant 27 intégré dans le boîtier 1, et passent dans le réservoir 15 via l'orifice d'admission 19. Elles sont alors dirigées de haut en bas dans le canal condenseur 17 délimité par les deux blocs réfrigérants 16 au contact desquels elles sont efficacement éliminées par condensation, la vapeur condensée arrivant dans la zone collectrice 20.

## Revendications

1. Appareil de cuisson, tel que par exemple une friteuse, comprenant un boîtier ouvert (1) susceptible d'être fermé par un couvercle (8), une cuve de cuisson (4) disposée dans le boîtier et fermée de façon sensiblement étanche par le couvercle pendant la phase de cuisson, un dispositif (13) de condensation des vapeurs de cuisson placé à l'extérieur du boîtier (1), et des moyens d'écoulement des vapeurs de cuisson reliant le volume supérieur de la cuve de cuisson (4) à l'entrée du dispositif de condensation (13),
**caractérisé en ce que** les moyens d'écoulement des vapeurs de cuisson sont constitués par au moins un conduit (22) présentant un tronçon dit amont (24) qui fait partie intégrante du couvercle (8) et dont les deux extrémités (25,26) débouchent chacune dudit couvercle, l'une (25) de ces extrémités du tronçon amont débouchant dans le volume supérieur de la cuve (4), ainsi qu'un tronçon dit aval (27) qui relie l'autre extrémité (26) du tronçon amont à l'entrée du dispositif de condensation (13).

2. Appareil de cuisson selon la revendication 1,
**caractérisé en ce que** le tronçon amont (24) du conduit (22) est formé dans l'épaisseur du couvercle (8).

3. Appareil de cuisson selon la revendication 1,
**caractérisé en ce que** le tronçon amont (24) du conduit (22) est constitué par une nervure réalisée dans le couvercle (8) et conformée en canal.

4. Appareil de cuisson selon l'une quelconque des revendications 1 à 3,
**caractérisé en ce que** le boitier (1) étant massif autour de son ouverture et présentant une face supérieure périphérique (9) sensiblement plane, et le dispositif de condensation (13) étant monté sur une face latérale du boitier, le tronçon aval (27) du conduit (22) est formé dans la masse du boîtier (1) d'une manière telle que, d'une part, une (29) de ses extrémités débouche de la face supérieure du boîtier et communique directement avec ladite autre extrémité (26) du tronçon amont (24), et d'autre part, son autre extrémité (30) débouche de la face latérale du boîtier et communique directement avec un orifice (19) ménagé dans le dispositif de condensation (13).

5. Appareil de cuisson selon l'une quelconque des revendications 1 à 3,
**caractérisé on ce que** le dispositif de condensation (13) étant monté à l'arrière du boîtier (1), le tronçon aval (27) du conduit présente une section de forme générale en L dont l'extrémité (29) de la branche verticale constitue l'extrémité débouchant de la face supérieure du boîtier et dont l'extrémité (30) de la branche horizontale débouche à l'arrière du boîtier, au niveau de l'orifice (19) du dispositif de condensation (13).

6. Appareil de cuisson selon la revendication 4 ou 5,
**caractérisé en ce que** le boîtier (1) et le couvercle (8) étant moulés chacun en une matière plastique, le tronçon amont (24) et le tronçon aval (27) du conduit (22) sont formés lors du moulage du couvercle et respectivement du boîtier.

7. Appareil de cuisson selon l'une quelconque des revendications précédentes,
**caractérisé en ce que** le couvercle (8) est monté articulé de façon amovible sur un bord supérieur (2) du boîtier (1).

## Claims

1. Cooking appliance, such as a fryer for example, comprising an open casing (1) able to be closed off by a lid (8), a cooking container (4) disposed inside the casing and closed in a substantially sealed manner by the lid during the cooking phase, a condensation device (13) for cooking vapours placed outside the casing (1), and outflow means for the cooking vapours connecting the upper volume of the cooking container (4) to the inlet of the condensation device (13), characterised in that outflow means are constituted by at least one outflow duct (22) having a so-called upstream section (24) which forms an integral part of the lid (8) and whose two ends (25, 26) each open out from the said lid, one (25) of these ends of the upstream section opening out into the upper volume of the container (4), and a so-called downstream section (27) which connects the other end (26) of the upstream section to the condensation device (13).

2. Cooking appliance according to claim 1, characterised in that the upstream section (24) of the duct (22) is formed within the thickness of the lid (8).

3. Cooking appliance according to claim 1, characterised in that the upstream section (24) of the duct (22) consists of a rib produced in the lid (8) and in the form of a channel.

4. Cooking appliance according to any one of claims 1 to 3, characterised in that, the casing (1) being solid around its opening and having a substantially flat peripheral top face (9), and the condensation device (13) being mounted on a lateral face of the casing, the downstream section (27) of the duct (22) is formed in the body of the casing (1) in such a manner that, on the one hand, one (29) of its ends opens out from the upper face of the casing and communicates directly with the said other end (26) of the upstream section (24) and, on the other hand, its other end (30) opens out from the lateral face of the casing and communicates directly with an orifice (19) formed in the condensation device (13).

5. Cooking appliance according to any one of Claims 1 to 3, characterised in that, the condensation device (13) being mounted at the rear of the casing (1), the downstream section (27) of the duct has a cross section of overall L shape on which the end (29) of the vertical leg constitutes the end opening out from the top face of the casing and on which the end (30) of the horizontal leg opens out at the rear of the casing, at the level of the orifice (19) of the condensation device (13).

6. Cooking appliance according to Claim 4 or 5, characterised in that, the casing (1) and the lid (8) each being moulded from a plastic material, the upstream section (24) and downstream section (27) of the duct (22) are formed during the moulding of the lid and of the casing respectively.

7. Cooking appliance according to any one of the preceding claims, characterised in that the lid (8) is mounted so as to be removably hinged on a top edge (2) of the casing (1).

## Patentansprüche

1. Kochgerät wie beispielsweise eine Friteuse mit einem offenen durch einen Deckel (8) schließbaren Gehäuse (1), einem im Gehäuse angeordneten Kochtopf (4), der während der Kochphase im wesentlichen dicht durch den Deckel verschlossen wird, einer außerhalb des Gehäuses (1) angeordneten Kondensiervorrichtung (13) der Kochdämpfe und Elementen zum Ableiten der Kochdämpfe, die das obere Volumen des Kochtopfs (4) mit dem Eingang der Kondensiervorrichtung (13) verbinden, **dadurch gekennzeichnet, daß** die Elemente zum Ableiten der Kochdämpfe durch mindestens einen Kanal (22) gebildet sind, der einen im Deckel (8) integrierten stromaufwärts liegenden sogenannten vorderen Teilabschnitt (24) aufweist, dessen zwei Enden (25, 26) jeweils aus dem Deckel münden, wobei das eine Ende (25) des vorderen Teilabschnitts in das obere Volumen des Topfs (4) mündet, sowie einen stromabwärts liegenden hinteren Teilabschnitt (27), welcher das andere Ende (26) des vorderen Teilabschnitts mit dem Eingang der Kondensiervorrichtung (13) verbindet.

2. Kochgerät nach Anspruch 1, **dadurch gekennzeichnet, daß** der vordere Teilabschnitt (24) des Kanals (22) in der Dicke des Deckels (8) ausgebildet ist.

3. Kochgerät nach Anspruch 1, **dadurch gekennzeichnet, daß** der vordere Teilabschnitt (24) des Kanals (22) durch eine im Deckel (8) ausgebildete Rille gebildet ist, die zu einem Kanal geformt ist.

4. Kochgerät nach einem der Ansprüche 1 bis 3, **dadurch gekennzeichnet, daß** das Gehäuse (1) um seine Öffnung herum massiv ist und eine die Öffnung umgebende im wesentlichen ebene obere Fläche (9) aufweist, daß die Kondensiervorrichtung (13) an einer Seitenfläche des Gehäuses montiert ist und daß der hintere Teilabschnitt (27) des Kanals (22) in der Masse des Gehäuses (1) so ausgebildet ist, daß einerseits eines (29) seiner Enden an der oberen Fläche des Gehäuses mündet und in direkter Verbindung mit dem zweiten Ende (26) des vorderen Teilabschnitts (24) steht, und andererseits sein anderes Ende (30) an der Seitenfläche des Gehäuses mündet und in direkter Verbindung mit einer in der Kondensiervorrichtung (13) ausgebildeten Öffnung (19) steht.

5. Kochgerät nach einem der Ansprüche 1 bis 3, **dadurch gekennzeichnet, daß** sich die Kondensiervorrichtung (13) an der Rückseite des Gehäuses (1) montiert ist und der hintere Teilabschnitt (27) des Kanals einen Schnitt der allgemeinen Form eines "L" aufweist, dessen Ende (29) des vertikalen Astes das Ende bildet, welches an der oberen Fläche des Gehäuses mündet und dessen Ende (30) des horizontalen Astes an der Rückseite des Gehäuses, in Höhe der Öffnung (19) der Kondensiervorrichtung (13), mündet.

6. Kochgerät nach Anspruch 4 oder 5, **dadurch gekennzeichnet, daß** das Gehäuse (1) und der Deckel (8) jeweils aus einem Kunststoff geformt sind und der vordere (24) und der hintere Teilabschnitt (27) des Kanals (22) während des Formens des Deckels bzw. des Gehäuses gebildet werden.

7. Kochgerät nach einem der vorangehenden Ansprüche, **dadurch gekennzeichnet, daß** der Deckel (8) abnehmbar an einem oberen Rand (2) des Gehäuses (1) angelenkt ist.
